Europäisches Patentamt

European Patent Office

Office européen des brevets

(19)

(11) Numéro de publication : **0 071 522**
**B1**

(12)

# FASCICULE DE BREVET EUROPÉEN

(45) Date de publication du fascicule du brevet :
26.03.86

(21) Numéro de dépôt : **82401359.3**

(22) Date de dépôt : **21.07.82**

(51) Int. Cl.⁴ : **B 21 K 23/02**, B 62 D 55/20

(54) **Procédé de forgeage pour la fabrication de maillons de chaînes de roulement, notamment pour engins de chantier.**

(30) Priorité : 24.07.81 FR 8114496

(43) Date de publication de la demande :
09.02.83 Bulletin 83/06

(45) Mention de la délivrance du brevet :
26.03.86 Bulletin 86/13

(84) Etats contractants désignés :
DE FR GB IT

(56) Documents cités :
FR-A- 1 368 336
GB-A- 780 940
METALWORKING PRODUCTION, vol.103, no.1, 2 janvier 1959, Londres (GB), "Making caterpillar links from bar", pp.7-10

(73) Titulaire : **CATERPILLAR TRACTOR CO.**
**100 Northeast Adams Street**
**Peoria Illinois 61629 (US)**

(72) Inventeur : **Balitch, Paul**
**6, rue Louise Michel**
**F-38100 Grenoble (FR)**

(74) Mandataire : **Lemoine, Robert et al**
**Cabinet Malémont 42, Avenue du Président Wilson**
**F-75116 Paris (FR)**

## Description

La présente invention concerne un procédé de forgeage pour la fabrication de maillons de chaînes de roulement, notamment pour engins de chantier, consistant successivement à chauffer un lopin de métal à la température usuelle de forgeage, à préformer à la presse le lopin ainsi chauffé, à estamper à plat la pièce résultant du préformage, à soumettre la pièce estampée à un calibrage horizontal et à un arasage de précision afin d'obtenir un maillon comportant des faces d'appui ayant un état de surface respectant des tolérances étroites, et à soumettre ce maillon à un traitement thermique.

Un tel procédé est décrit dans l'article « Making carterpillar links from bar » paru dans le document « Metalworking production ». Il permet de fabriquer des maillons de chaînes de roulement sans qu'il soit obligatoire d'usiner leurs faces d'appui, c'est-à-dire leurs faces destinées soit à venir en contact avec les galets du train de roulement, soit à supporter l'un des patins de chaîne. Il autorise en effet l'utilisation de lopins ne comportant pas de surépaisseurs dans leurs parties correspondant aux faces d'appui et favorise donc la réalisation d'économie non seulement de matière mais également d'énergie lors du chauffage des lopins à forger.

Le procédé selon l'article précité ne permet toutefois pas d'obtenir aisément un parallélisme rigoureux des faces d'appui, ni de rattraper les dispersions dues aux dilatations thermiques qui apparaissent généralement dans la cote entre lesdites faces d'appui.

La présente invention se propose précisément de remédier à cet inconvénient et, pour ce faire, elle a pour objet un procédé de forgeage du type décrit ci-dessus qui se caractérise en ce qu'il consiste, avant d'effectuer le traitement thermique, à réaliser un calibrage vertical du maillon en le dressant sur l'une de ses faces d'appui, entre deux plans de référence réglables en hauteur, et à ajuster la distance des deux plans de référence afin de régler avec précision le parallélisme desdites faces d'appui ainsi que la cote entre celles-ci.

De préférence, le calibrage vertical du maillon est réalisé après stabilisation de la température de celui-ci à une valeur constante prédéterminée.

Il est possible ainsi de mieux rattraper les dispersions dues aux dilatations thermiques qui peuvent apparaître dans la cote entre les deux faces d'appui du maillon et de corriger parfaitement les défauts de parallélisme entre ces dernières.

Pour éviter une décarburation et une formation de calamine sur les parties extérieures du maillon, il est par ailleurs souhaitable que le chauffage du lopin de métal soit réalisé dans un four électrique.

Le procédé de forgeage selon la présente invention se montre particulièrement avantageux puisqu'il permet de réaliser des économies de matière et d'énergie et de fabriquer des maillons de chaînes de roulement avec des précisions géométriques et dimensionnelles de l'ordre du dixième de millimètre, avec une constance de ces précisions et une qualité d'état de surface qui sont hors de portée des procédés de forgeage traditionnels.

Les caractéristiques et avantages du procédé selon la présente invention ressortiront mieux à la lecture de la description qui sera donnée ci-après à titre d'exemple non limitatif en référence aux dessins annexés dans lesquels :

la figure 1 illustre de façon très schématique la première étape du procédé de forgeage, à savoir le chauffage d'un lopin de métal dans un four électrique ;

la figure 2 illustre la deuxième étape du procédé, à savoir le préformage du lopin ainsi chauffé ;

la figure 3 est une vue en plan suivant la ligne III-III de la figure 2 ;

la figure 4 illustre la troisième étape du procédé, à savoir l'estampage à plat de la pièce préformée ;

la figure 5 est une vue en plan suivant la ligne V-V de la figure 4 ;

les figures 6 et 7 illustrent, sous deux angles différents, la quatrième étape du procédé, à savoir le calibrage horizontal et l'arasage combinés de la pièce estampée ;

la figure 8 montre la pièce obtenue à la suite de cette opération ;

la figure 9 montre les bavures qui en résultent ;

la figure 10 illustre la cinquième étape du procédé, à savoir le calibrage vertical du maillon ;

la figure 11 est une vue en plan suivant la ligne XI-XI de la figure 10,

la figure 12 illustre l'étape éventuelle de stabilisation thermique du maillon avant son calibrage vertical ;

la figure 13 illustre une partie de la sixième étape du procédé, à savoir par immersion de la pièce ;

la figure 14 représente de manière plus détaillée le dispositif de la figure 7, en position de repos sur la moitié gauche et en position de travail sur la moitié droite ;

la figure 15 est une vue en élévation du maillon de chaîne de roulement obtenu par le procédé de forgeage conforme à l'invention ; et

la figure 16 est une vue en coupe suivant la ligne XVI-XVI de la figure 15.

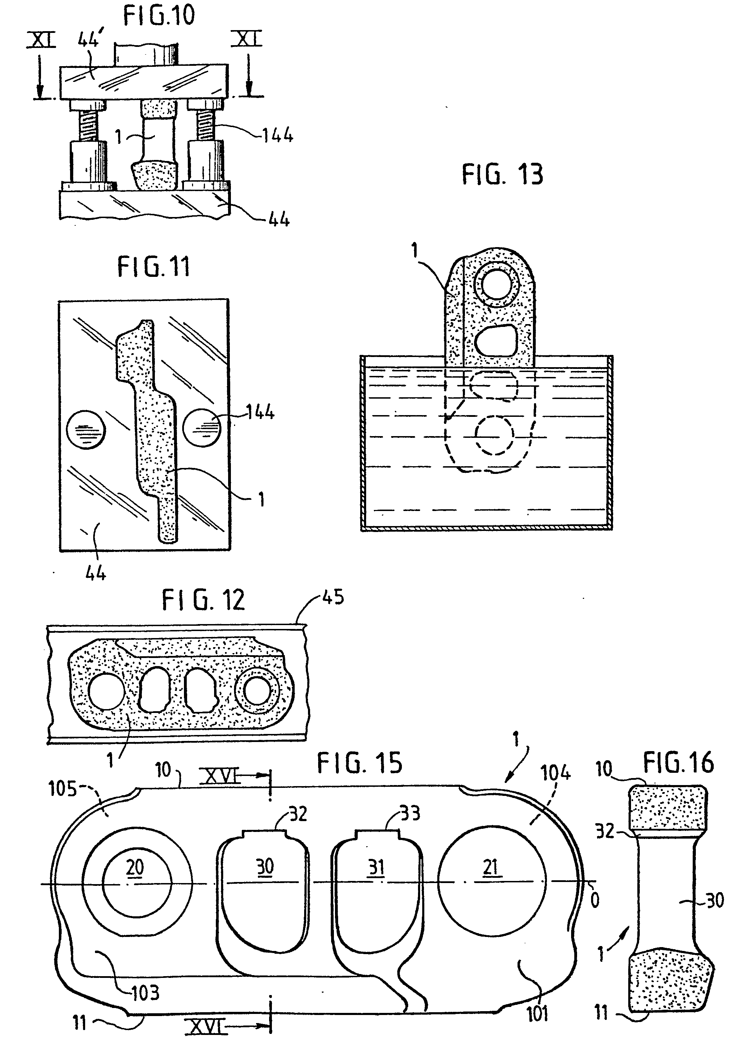

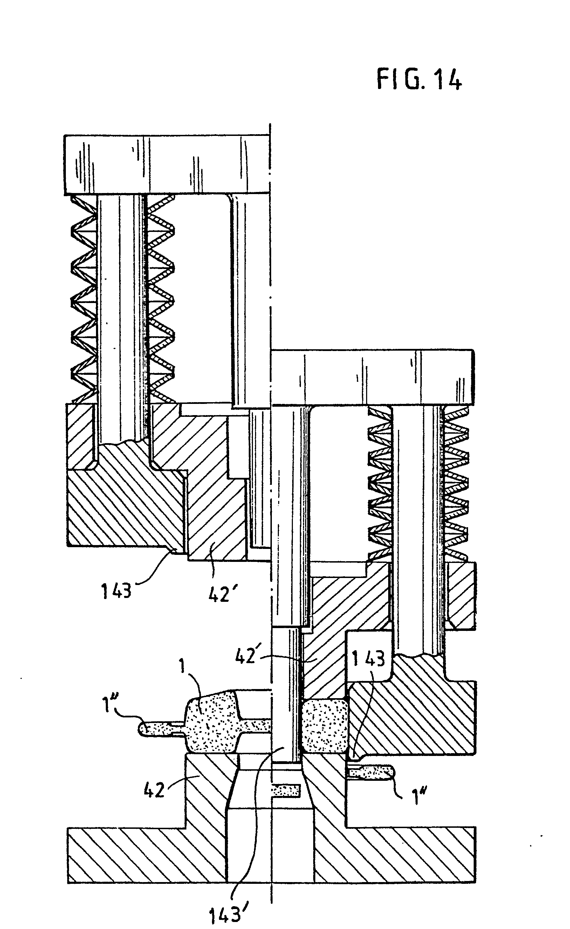

Ainsi que le montrent les figures 15 et 16, le maillon de chaîne de roulement obtenu par le procédé de forgeage selon l'invention est constitué d'un corps en acier 1, de forme oblongue, présentant deux faces d'appui supérieure 10 et inférieure 11. La face d'appui supérieure 10 sert plus précisément au montage du patin de chaîne, tandis que la face d'appui inférieure est destinée à rouler sur les galets du train de roulement. Le corps 1 est en outre percé de deux alésages 20 et 21 pour les axes d'articulation du maillon, ainsi que de deux lumières 30 et 31 dans lesquelles sont réalisés des sièges 32 et 33 destinés à servir d'appui pour les écrous de fixation du patin de chaîne. Autour des alésages 20 et 21, s'étendent les plans d'articulation 101, 103, 104, 105 du maillon.

Les faces d'appui 10 et 11 ainsi que les sièges d'écrou 32 et 33 du maillon doivent présenter une géométrie, des dimensions et un état de surface très précis respectant des tolérances très étroites et doivent être parfaitement parallèles au plan 0 contenant les axes des deux alésages 20 et 21. Par ailleurs, les plans d'articulation du maillon doivent présenter un parallélisme parfait. Ces conditions très strictes sont nécessaires, pour garantir d'une part, une fixation sûre et durable du patin de chaîne sur le maillon et, d'autre part, un bon fonctionnement, par exemple sur un engin de chantier, de la chaîne de roulement formée de maillons articulés bout à bout.

Selon les procédés traditionnels, on arrivait à ces résultats par des usinages de précision complexes, longs et coûteux complétant les opérations classiques de forgeage.

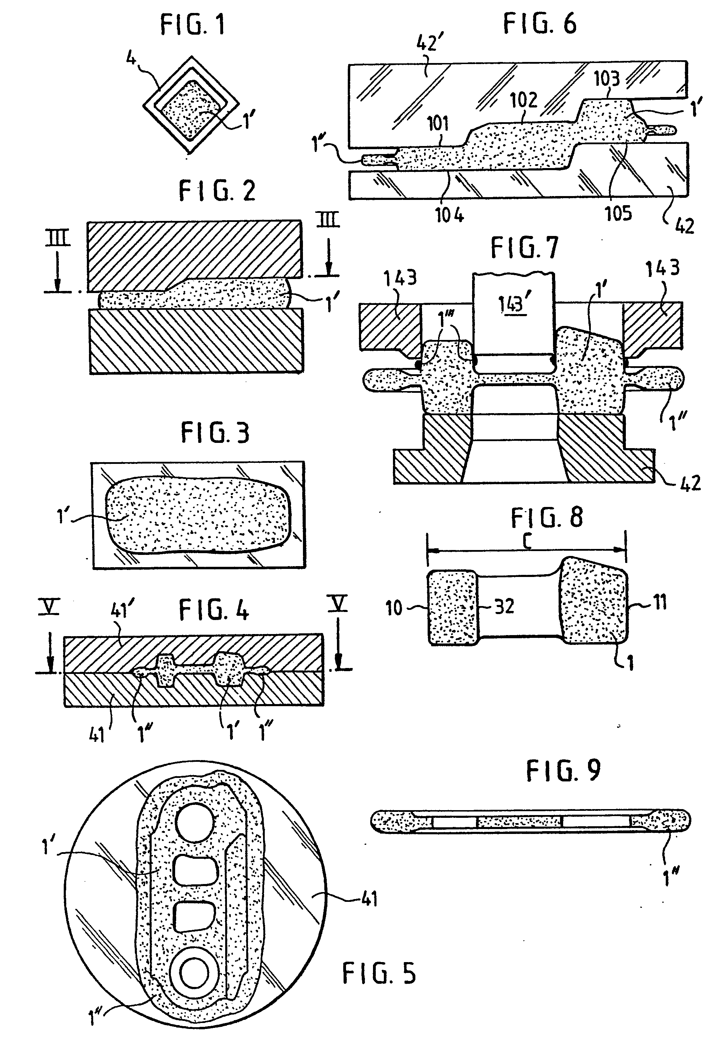

Le procédé de forgeage selon l'invention procure les mêmes résultats et les améliore même par la mise en œuvre de la succession d'étapes décrite ci-dessous en référence aux figures 1 à 14.

On part tout d'abord d'un lopin de métal 1' ayant une masse correspondant à celle d'un maillon normalement obtenu après finition des faces 10, 11 et des sièges 32, 33, augmenté du pourcentage habituel pour les bavures et dépouilles. On place ce lopin 1' dans un four électrique 4 pour le chauffer à la température usuelle de forgeage, comme représenté sur la figure 1. Le four électrique 4 est de préférence un four à induction. Le lopin 1' ainsi chauffé électriquement conserve ses propriétés métallurgiques de départ et, notamment, n'est pas sujet à une décarburation ni à une formation de calamine.

A l'étape suivante illustrée par les figures 2 et 3, le lopin chauffé 1' est préformé à la presse. Cette opération donne au lopin la forme extérieure générale du maillon à obtenir, à des dimensions dépassant les dimensions nominales définitives à chaud de celui-ci.

Vient ensuite l'étape représentée sur les figures 4 et 5 qui consiste en un estampage à plat de la pièce ainsi préformée entre deux demi-matrices 41-41' reproduisant aux dépouilles et bavures près, la forme définitive du maillon à obtenir, qui inclut notamment les alésages 20 et 21 et les lumières 30 et 31. Les demi-matrices 41-41' ont des empreintes réalisées avec précision pour que la pièce estampée ait les dimensions nominales à chaud précises du maillon à obtenir avec des surépaisseurs réduites à l'importance des dépouilles, et des bavures 1" localisées au plan de joint.

L'étape qui suit, illustrée par les figures 6 à 9 consiste en un calibrage horizontal combiné à un arasage de précision à chaud de la pièce estampée. Cette double opération est effectuée à l'aide d'un outillage spécial représenté sur la figure 14. Dans un premier temps, on fait reposer à plat la pièce estampée dans une demi-empreinte inférieure 42 et on la comprime, sous une pression prédéterminée, à l'aide d'une demi-empreinte supérieure 42'. Les faces de contact des demi-empreintes 42-42' sont calibrées avec précision pour que les faces latérales du maillon reçoivent leur géométrie définitive et, notamment, pour qu'un parallélisme parfait et des cotes précises soient conférés aux plans d'articulation 101, 103, 104, 105 du maillon. Ce calibrage horizontal étant réalisé et le maillon étant maintenu bloqué entre les demi-empreintes, des couteaux 143 et 143', qui font partie du même outillage, sont descendus verticalement le long des faces à araser pour les cisailler. Cette opération d'arasage a non seulement pour but d'éliminer les bavures et dépouilles résultant de l'estampage, mais surtout de conférer leurs dimensions précises à chaud et un état de surface de bonne qualité aux faces d'appui 10, 11 et aux sièges d'écrou 32, 33 du maillon. A cette fin, les couteaux 143 et 143' sont conçus avec précision en aciers spéciaux et leur position est réglée de manière très précise. L'arasage des faces d'appui et des sièges d'écrou remplace en fait les opérations de fraisage et de brochage des procédés traditionnels en offrant des résultats comparables. Il va de soi qu'en vue de cet arasage, les dépouilles de la pièce estampée doivent être prévues suffisamment épaisses.

Cette opération de calibrage horizontal et d'arasage combinés produit le maillon 1 représenté sur la figure 8, qui se présente sous ses dimensions nominales à chaud.

La figure 9 illustre quant à elle les bavures 1" résultant de cette même opération.

Toutefois, à ce stade du procédé, les maillons sont à des températures qui peuvent varier d'un maillon à l'autre. L'expérience montre que ces températures varient entre 800 °C et 900 °C. Les dilatations thermiques qui en résultent engendrent inévitablement des dispersions dans la cote C entre les faces d'appui 10 et 11, qui peut dès lors sortir des tolérances requises. C'est pourquoi, le procédé de forgeage selon l'invention comprend une étape essentielle de calibrage vertical du maillon, illustrée sur les figures 10 et 11. Ce calibrage vertical vise à rattraper les dispersions apparaissant dans la cote C, à régler avec précision le parallélisme entre les deux faces d'appui 10 et 11 et à affiner leur état de surface.

Plus précisément, cette opération de calibrage vertical consiste à dresser le maillon 1 sur l'une de ses faces d'appui, entre deux plans de référence 44-44' calibrés avec précision et reliés par des entretoises 144 de hauteur réglable, puis à ajuster avec précision cette hauteur à la cote C que l'on souhaite avoir entre les deux faces d'appui 10 et 11 du maillon.

En vue d'affiner cette précision, on effectue le calibrage vertical du maillon après stabilisation de la température de ce dernier à une valeur constante prédéterminée. Les essais de la Demanderesse ont montré que le calibrage vertical procure ses meilleurs résultats lorsque cette température est stabilisée à environ 830 °C. Cette stabilisation de la température du maillon est plus précisément obtenue par refroidissement du maillon issu de l'étape précédente à une température constante inférieure à la température prédéterminée de stabilisation, puis par réchauffage jusqu'à cette température prédéterminée. Avantageusement, on laisse refroidir le maillon à l'air jusqu'à 800 °C de manière à couvrir tout l'intervalle dans lequel est comprise la température du maillon en sortie de l'opération d'arasage. On réchauffe ensuite le maillon à 830 °C en le faisant avancer à travers un tunnel à induction 45 (figure 12) à la sortie duquel il possède une température constante rigoureusement contrôlée. Le maillon est alors immédiatement calibré verticalement.

L'opération de trempe qui suit peut avantageusement avoir lieu immédiatement après le calibrage vertical. Dans ce cas, on réalise une économie d'énergie en ce sens que l'on utilise pour cette trempe la température résiduelle de forgeage du maillon. La trempe est effectuée par immersion dans un liquide, comme représenté sur la figure 13. Suit alors l'opération classique de revenu. Le procédé de forgeage selon l'invention se termine par le grenaillage, le contrôle de finition et le conditionnement du maillon. Celui-ci est alors prêt à être soumis aux opérations d'usinage des alésages des axes d'articulation et de perçage des trous de fixation du patin de chaîne.

En rappelant que le procédé de forgeage selon l'invention produit des maillons finis, dans le respect des tolérances exigées et sans nécessité d'usiner les faces d'appui et les sièges d'écrou, qu'il permet des économies substantielles de matière première et d'énergie et qu'il peut être exécuté en continu, on doit encore mentionner que les précisions géométriques et dimensionnelles ainsi que la qualité d'état de surface obtenues sont très nettement améliorées et ne peuvent pas être atteintes par les procédés traditionnels. En particulier, dans l'opération de calibrage vertical, la précision du réglage et la rigueur du contrôle de température du maillon garantissent une précision de la cote entre les faces d'appui, qu'aucun autre moyen industriel applicable économiquement à de telles fabrications ne peut approcher.

**Revendications**

1. Procédé de forgeage pour la fabrication de maillons de chaînes de roulement, notamment pour engins de chantier, consistant successivement à chauffer un lopin de métal (1') à la température usuelle de forgeage, à préformer à la presse le lopin ainsi chauffé, à estamper à plat la pièce résultant du préformage, à soumettre la pièce estampée à un calibrage horizontal et à un arasage de précision afin d'obtenir un maillon (1) comportant des faces d'appui (10, 11) ayant un état de surface respectant des tolérances étroites, et à soumettre ce maillon à un traitement thermique, caractérisé en ce qu'il consiste, avant d'effectuer le traitement thermique, à réaliser un calibrage vertical du maillon (1) en le dressant sur l'une de ses faces d'appui (10, 11), entre deux plans de référence (44, 44') réglables en hauteur et à ajuster la distance des deux plans de référence afin de régler avec précision le parallélisme desdites faces d'appui ainsi que la cote (C) entre celles-ci.

2. Procédé de forgeage selon la revendication 1, caractérisé en ce que le calibrage vertical du maillon (1) est réalisé après stabilisation de la température de celui-ci à une valeur constante prédéterminée.

3. Procédé de forgeage selon la revendication 2, caractérisé en ce que la température du maillon est stabilisée à environ 830 °C.

4. Procédé de forgeage selon la revendication 2 ou 3, caractérisé en ce que la stabilisation de la température du maillon (1) est obtenue par refroidissement de la pièce estampée et arasée, à une température constante inférieure à la température prédéterminée, puis réchauffage jusqu'à cette dernière.

5. Procédé de forgeage selon la revendication 4, caractérisé en ce que la température à laquelle la pièce estampée et arasée est refroidie est d'environ 800 °C.

6. Procédé de forgeage selon la revendication 4 ou 5, caractérisé en ce que le réchauffage de la pièce estampée et arasée a lieu dans un tunnel à induction (45).

7. Procédé de forgeage selon l'une quelconque des revendications 1 à 6, caractérisé en ce que le traitement thermique comprend une trempe réalisée immédiatement à la suite du calibrage vertical du maillon (1).

8. Procédé de forgeage selon l'une quelconque des revendications 1 à 7, caractérisé en ce que l'estampage à plat est réalisé en comprimant la pièce préformée entre deux demi-matrices (41, 41') qui reproduisent, aux dépouilles et bavures près, les formes et dimensions nominales à chaud du maillon à obtenir.

9. Procédé de forgeage selon l'une quelconque des revendications 1 à 8, caractérisé en ce que le calibrage horizontal et l'arasage de précision sont réalisés en comprimant la pièce estampée sous une pression prédéterminée entre deux demi-empreintes (42, 42'), et en faisant descendre verticalement le long des faces à araser, des couteaux (143, 143') dont la position a été préalablement réglée.

10. Procédé de forgeage selon l'une quelconque des revendications 1 à 9, caractérisé en ce que le chauffage du lopin de métal (1') est réalisé dans un four électrique (4).

**Claims**

1. A method of forging for the manufacture of track chain links, in particular for field vehicles, consisting in succession of heating a metal billet (1') to the usual temperature for forging, in preshaping by press the billet so heated, in stamping flat the piece resulting from the preshaping, in subjecting the stamped piece to horizontal gauging and precision trimming in order to obtain a link (1) including bearing surfaces (10, 11) having a surface state having regard for close tolerances, and in subjecting this link to heat treatment, characterized in that it consists before carrying out the heat treatment, in effecting a vertical gauging of the link (1) by standing it up on one of its bearing surfaces (10, 11) between two reference planes (44, 44') adjustable in height and in adjusting the distance between the two reference planes in order to adjust with accuracy the parallelism of the said bearing surfaces as well as the dimension (C) between them.

2. A method of forging as in Claim 1, characterized in that the vertical gauging of the link (1) is effected after stabilization of its temperature at a predetermined constant value.

3. A method of forging as in Claim 2, characterized in that the temperature of the link is stabilized at about 830 ºC.

4. A method of forging as in Claim 2 or 3, characterized in that the stabilization of the temperature of the link (1) is obtaining by cooling the stamped and trimmed piece to a constant temperature less than the predetermined temperature and then reheating up to the latter.

5. A method of forging as in Claim 4, characterized in that the temperature to which the stamped and trimmed piece is cooled is about 800 ºC.

6. A method of forging as in Claim 4 or 5, characterized in that the reheating of the stamped and trimmed piece takes place in an induction tunnel (45).

7. A method of forging as in any one of the Claims 1 to 6, characterized in that the heat treatment comprises tempering effected immediately following the vertical gauging of the link (1).

8. A method of forging as in any one of the Claims 1 to 7, characterized in that the stamping flat is effected by compressing the preshaped piece between two half-dies (41, 41') which reproduce except for the tapers and burrs the nominal hot shapes and dimensions of the link which is to be obtained.

9. A method of forging as in any one of the Claims 1 to 8, characterized in that the horizontal gauging and the precision trimming are effected by compressing the stamped piece under a predetermined pressure between two half-moulds (42, 42') and by making descend vertically along the faces which are to be trimmed, shear blades (143, 143') the position of which has been previously adjusted.

10. A method of forging as in any one of the Claims 1 to 9, characterized in that the heating of the metal billet (1') is effected in an electric furnace (4).

## Patentansprüche

1. Schweißverfahren für die Herstellung von Laufkettengliedern, insbesondere für Baumaschinen wobei aufeinander folgend folgendes vorgesehen ist : Erwärmung eines Metallteils (1') auf eine zum Schweißen übliche Temperatur, Vorformung des auf diese Weise erwärmten Gliedes mit einer Presse, Plattpressen des sich durch die Vorformung ergebenden Teils, Aussetzen des Preßteils gegenüber einer horizontalen Kalibration und einer Präzisionsabtrennung um ein Glied (1) zu erhalten, welches Anlageflächen (10, 11) aufweist, die einen Oberflächenzustand mit geringen Toleranzen besitzen, und Aussetzen des Gliedes gegenüber einer Wärmebehandlung, dadurch gekennzeichnet, daß vor der Durchführung der Wärmebehandlung eine Vertikalkalibration des Gliedes (1) vorgesehen wird, wobei dieses an einer seiner Anlageflächen (10, 11) bearbeitet wird, und zwar zwischen zwei in ihrer Höhe einstellbaren Bezugsebenen (44, 44') und durch Einstellung des Abstandes der zwei Bezugsebenen um mit Präzision die Parallelität der erwähnten Anlageflächen wie auch der Seite C dazwischen zu regeln.

2. Schweißverfahren nach Anspruch 1, dadurch gekennzeichnet, daß die Vertikalkalibration des Gliedes (1) realisiert wird, nachdem die Temperatur des Gliedes auf einen vorbestimmten konstanten Wert stabilisiert ist.

3. Schweißverfahren nach Anspruch 2, dadurch gekennzeichnet, daß die Temperatur des Gliedes auf ungefähr 830 ºC stabilisert ist.

4. Schweißverfahren nach Anspruch 2 oder 3, dadurch gekennzeichnet, daß die Stabilisation der Temperatur des Gliedes (1) erreicht wird durch Abkühlung des gepreßten und dem Abtrennvorgang unterworfenen Gliedes auf eine konstante Temperatur unterhalb der vorbestimmten Temperatur, worauf die Gliedererwärmung bis auf die vorbestimmte Temperatur erfolgt.

5. Verfahren nach Anspruch 4, dadurch gekennzeichnet, daß die Temperatur bei der das gestanzte und dem Abtrennvorgang unterworfene Teil abgekühlt wird, ungefähr 800 ºC beträgt.

6. Schweißverfahren nach Anspruch 4 oder 5, dadurch gekennzeichnet, daß die Wiedererwärmung des gestanzten und abgetrennten Teils in einem Induktionstunnel (45) erfolgt.

7. Schweißverfahren nach einem der Ansprüche 1 bis 6, dadurch gekennzeichnet, daß die thermische Behandlung eine Härtung umfaßt, die unmittelbar folgend auf die Vertikalkalibration des Gliedes (1) vorgesehen ist.

8. Schweißverfahren nach einem der Ansprüche 1 bis 7, dadurch gekennzeichnet, daß das Eben-Preßverfahren realisiert wird, indem das vorgeformte Teil zwischen zwei Halb-Matrizen (41, 41') zusammengedrückt wird, welche mit Verjüngungen und Rändern die Form und Nominaldimensionen des kalten Teils erreichen.

9. Schweißverfahren nach einem der Ansprüche 1 bis 8, dadurch gekennzeichnet, daß die Horizontalkalibrierung und Präzisionsabtrennung realisiert wird, indem das Preßteil unter einem vorbestimmten Druck zwischen zwei Halbstempeln (42, 42') zusammengepreßt wird, wobei die vertikale Hinabbewegung der Abtrennwange der Messer (143, 143'), deren Position vorher geregelt wurde, bewirkt wird.

10. Schweißverfahren nach einem der Ansprüche 1 bis 9, dadurch gekennzeichnet, daß die Erwärmung des Metallteils (1') in einem elektrischen Ofen (4) bewirkt wird.

0 071 522

FIG. 1

FIG. 6

FIG. 2

FIG. 7

FIG. 3

FIG. 8

FIG. 4

FIG. 9

FIG. 5

FIG.10

FIG. 13

FIG.11

FIG. 12

FIG. 15

FIG.16

2

FIG. 14

0 071 522

3